# EUROPÄISCHE PATENTSCHRIFT

(11) **EP 2 943 524 B1**
(45) Veröffentlichungstag und Bekanntmachung des Hinweises auf die Patenterteilung: **07.09.2016**
(21) Anmeldenummer: 14702458.2
(22) Anmeldetag: 08.01.2014
(51) Int. Cl.: C08G 77/52, C08G 77/60

(54) **POLYARYLETHERKETON-POLYSILOXAN/POLYSILAN-HYBRIDPOLYMER UND VERFAHREN ZU DESSEN HERSTELLUNG**
POLYARYLETHERKETONE POLYSILOXANE/POLYSILANE HYBRID POLYMER AND METHOD FOR THE PRODUCTION THEREOF
POLYMÈRES HYBRIDES DE POLYARYLÉTHERCÉTONE ET DE POLYSILOXANE/ POLYSILANE ET PROCÉDÉ POUR LES PRÉPARER

(30) Priorität: 09.01.2013 DE 102013200202
(43) Veröffentlichungstag der Anmeldung: 18.11.2015
(73) Patentinhaber: Perpetuum-Ebner GmbH & Co. Kg, 78112 St. Georgen (DE)
(72) Erfinder: BECKMANN, Jens, 28203 Bremen (DE)
(74) Vertreter: Maikowski & Ninnemann Patentanwälte Partnerschaft mbB
(86) Internationale Anmeldenummer: PCT/EP2014/050189
(87) Internationale Veröffentlichungsnummer: WO 2014/108422

(56) Entgegenhaltungen:
- CN-A- 101 717 511

## Beschreibung

Die Erfindung betrifft ein Polyaryletherketon-Polysiloxan/Polysilan-Hybridpolymer gemäß dem Oberbegriff des Anspruchs 1 und Verfahren zu dessen Herstellung gemäß den Oberbegriffen der Ansprüche 5, 8 und 9.

Polysiloxane und Polysilane sind Polymere mit zahlreichen Anwendungen, unter anderem im medizintechnischen Bereich.

Polyaryletherketone (PAEK) sind Hochleistungskunststoffe, die in den Bereichen der Automobile und Schienenfahrzeuge, Luft- und Raumfahrt, Maschinen- und Apparatebau, Elektrotechnik und Kabel, Elektronik und Halbleiter, Medizintechnik sowie die lebensmittelverarbeitenden Industrie in weiter wachsender Menge eingesetzt werden.

PAEK weisen sehr vorteilhafte Materialeigenschaften auf: hohe Temperaturbeständigkeit, hervorragende Verschleißeigenschaften, hohe Chemikalienbeständigkeit, geringe Feuchtigkeitsaufnahme, gute Reinheit, elektrische Stabilität, Strahlungsbeständigkeit, erstklassige mechanische Eigenschaften, Halogenfreiheit, RoHS- und FDA-Zulassung, schwer entflammbar ohne den Einsatz von Flammschutzmitteln, geringe Toxizität der Verbrennungsgase, recyclingfähig.

Beispiele für industriell genutzte PAEK sind Polyetheretherketon (PEEK), Polyetherketon (PEK) und Polyetherketonetherketonketon (PEKEKK), deren Strukturformeln nachfolgend wiedergegeben sind:

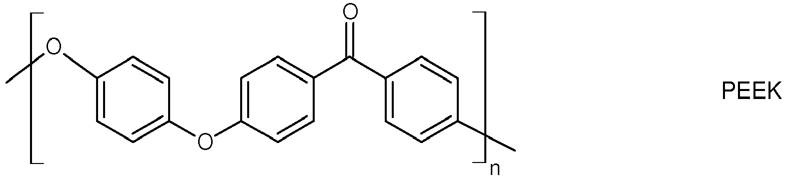

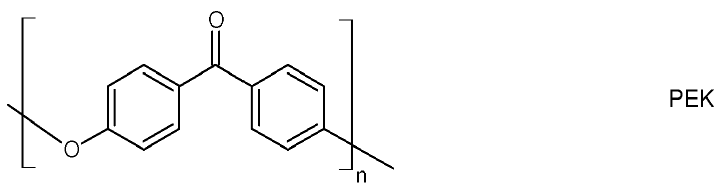

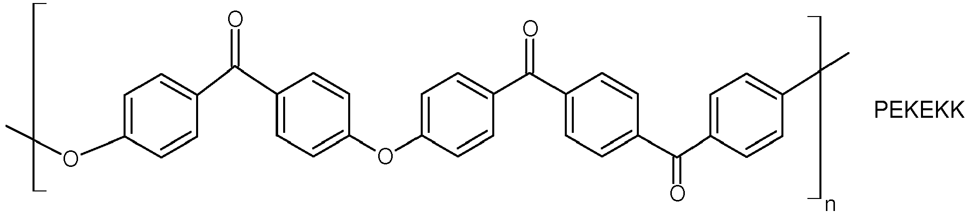

Aus der CN 101717511 A sind Silylphenolate bzw. Phenoxysilane bekannt, die eine Silyletherfunktion (Si-O-C) aufweisen. Derartige Verbindungen sind sehr hydrolyseempfindlich, zumal Phenylreste eine gute Abgangsgruppe darstellen. Tetrafluorphenylreste, die in dieser chinesischen Patentanmeldung beschrieben werden, stellen eine noch bessere Abgangsgruppe als unsubstituierte Phenylreste dar, so dass die entsprechenden Silylphenolate noch leichter hydrolisierbar sind.

Der vorliegenden Erfindung liegt die Aufgabe zugrunde, die vorteilhaften Eigenschaften von Polyaryletherketonen noch weiter zu verbessern, ohne leicht hydrolisierbare Gruppen in Polyaryletherketone einzuführen.

Diese Aufgabe wird mit einem Polyaryletherketon-Polysiloxan/Polysilan-Hybridpolymer mit den Merkmalen des Anspruchs 1 gelöst.

Ein solches Polyaryletherketon-Polysiloxan/Polysilan-Hybridpolymer weist zumindest eine Einheit mit der nachfolgenden allgemeinen Strukturformel (I) oder (II) auf, 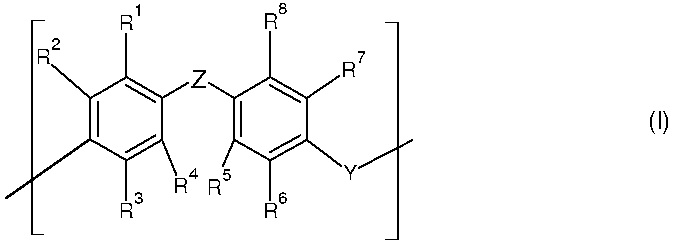 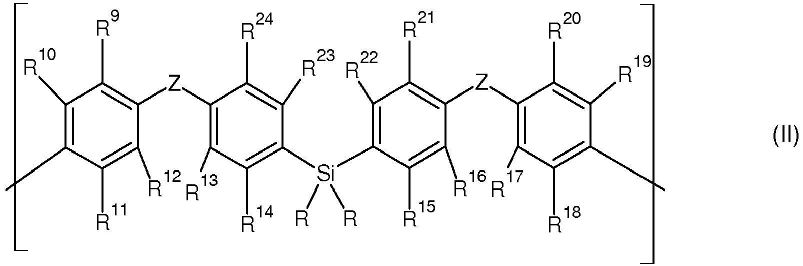 wobei
R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴
H, D, OH, X, substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
R jeweils unabhängig von anderen Resten R im selben Molekül ein C₁-C₂₀-Alkyl, C₁-C₂₀-Alkenyl oder C₆-C₂₀-Aryl, das jeweils durch ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22, insbesondere maximal 21, insbesondere maximal 20, insbesondere maximal 19, insbesondere maximal 18, insbesondere maximal 17, insbesondere maximal 16, insbesondere maximal 15, insbesondere maximal 14, insbesondere maximal 13, insbesondere maximal 12, insbesondere maximal 11, insbesondere maximal 10, insbesondere maximal 9, insbesondere maximal 8, insbesondere maximal 7, insbesondere maximal 6, insbesondere maximal 5, insbesondere maximal 3, insbesondere maximal 2 und insbesondere maximal 1 beträgt, wobei R insbesondere substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
X jeweils unabhängig von anderen Resten X F, Cl, Br oder I bedeutet,
Y ein Rest der folgenden allgemeinen Formeln (III) oder (IV) ist und
Z eine Carbonylgruppe oder ein mit einer beliebigen Schutzgruppe, insbesondere einer Carbonylschutzgruppe, versehenes Kohlenstoffatom bedeutet:

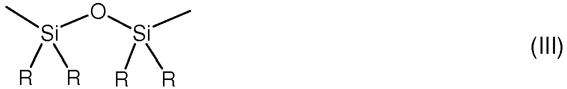

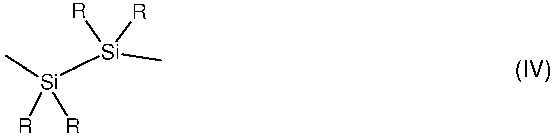

Die beanspruchten Polyaryletherketon-Polysiloxan/Polysilan-Hybridpolymere weisen eine unmittelbar an ein Kohlenstoffatom unter Ausbildung einer C-Si-Bindung gebundene Silylgruppe auf. Diese Silylgruppe ist eine strukturelle Einheit, die sowohl in der allgemeinen Strukturformel (I) als auch in der allgemeinen Strukturformel (II) enthalten ist und damit ein einheitliches Motiv beider Strukturformeln darstellt. Da kein Silylether mit dem Strukturmotiv Si-O-C vorhanden ist, können die beanspruchten Hybridpolymere nicht leicht hydrolysiert werden.

Jedes PAEK ist aus einer Vielzahl von Monomereinheiten gebildet, die jeweils gleich oder aber unterschiedlich sein können. Sämtliche Monomereinheiten (100 %) stellen dann das gesamte polymere PAEK-Molekül dar. Vorzugsweise enthält es zahlreiche Einheiten mit der allgemeinen Strukturformel (I) oder (II), die jeweils miteinander verknüpft sind oder durch gewöhnliche PAEK-Einheiten (ohne Silan/Siloxan-Brückenglieder) unterbrochen sind. In einer Ausführungsform sind 1 % bis 100 %, insbesondere 10 % bis 90 %, insbesondere 20 % bis 80 %, insbesondere 30 % bis 70 %, insbesondere 40 % bis 60 % und ganz besonders 50 % bis 55 % der Monomereinheiten des Polyaryletherketon-Polysiloxan/Polysilan-Hybridpolymers Einheiten der allgemeinen Strukturformel (I) und/oder (II). Das heißt, das PAEK kann beispielsweise insgesamt zu einem Viertel (25 %) aus Monomereinheiten mit der allgemeinen Strukturformel (I) bestehen, die gleichmäßig oder ungleichmäßig über das gesamte Polymer verteilt sind und von Monomereinheiten ohne Silan/Siloxan-Brückengliedern unterbrochen werden. Die übrigen Monomereinheiten (ohne Silan/Siloxan-Brückenglieder) des beanspruchten PAEK sind beispielsweise Monomereinheiten des oben dargestellten Typs PEEK, PEK und/oder PEKEKK, wobei hier grundsätzlich beliebige Kombinationen möglich sind. Ferner sind Modifikationen oder Substitutionen dieser übrigen Monomereinheiten möglich. Damit besteht das beanspruchte PAEK einerseits aus Standardbausteinen, aus denen auch bekannte PAEK bestehen, und den erfindungsgemäßen Polyaryletherketon-Einheiten der allgemeinen Strukturformel (I) und/oder (II) mit Silan/Siloxan-Brückengliedern.

Das heißt, die folgenden Hybridpolymere fallen unter die vorstehenden Formeln (I) und (II): 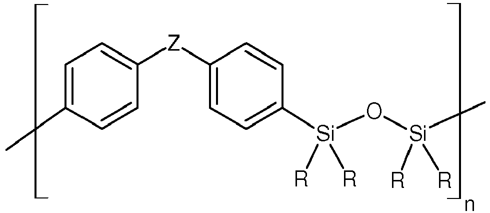 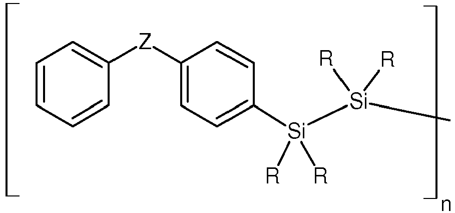 Vorzugsweise ist die Schutzgruppe eine Carbonylschutzgruppe, also eine Schutzgruppe, die geeignet ist, eine Carbonylfunktion zu schützen. Eine besonders geeignete Carbonylschutzgruppe ist eine Verbindung der allgemeinen Formel (V), 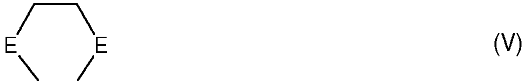 wobei E ein Sauerstoff- oder ein Schwefelatom bedeutet und wobei das zu schützende Kohlenstoffatom mittels der beiden in der Formel (V) dargestellten Bindungen an die Atome des Typs E gebunden ist, wie dies in der nachfolgenden allgemeinen Formel (IX) beispielhaft dargestellt ist:

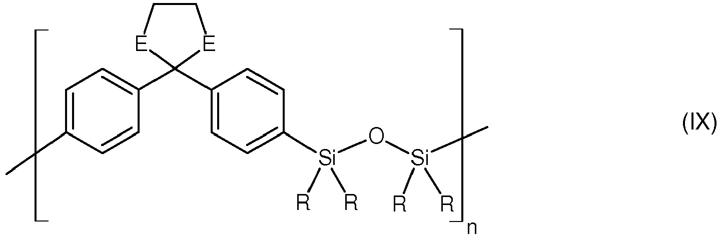

Es ist auch möglich, dass sowohl ein Sauerstoff- als auch ein Schwefelatom in der Schutzgruppe enthalten ist, der Gruppe "E" also in einem Molekül zwei unterschiedliche Bedeutungen zukommen.

In einer alternativen Ausgestaltung ist der Rest R ausgewählt aus der Gruppe bestehend aus substituierten oder nicht substituierten C₁-C₅-Alkylen, substituierten oder nicht substituierten C₁-C₅-Alkenylen und substituierten oder nicht substituierten C₆-C₁₀-Arylen, insbesondere bestehend aus substituiertem oder nicht substituiertem Methyl, Ethyl, Propyl, Butyl, tert-Butyl, Pentyl, Vinyl, Allyl, Benzyl, Phenyl und Naphthyl.

Vorzugsweise sind zwischen den Resten R (mit oder ohne Index) einzelner Monomereinheiten des Hybridpolymers Bindungen ausgebildet, die eine dreidimensionale, insbesondere intramolekulare, Verknüpfung des Hybridpolymers ermöglichen, wenn das Polyaryletherketon-Polysiloxan/Polysilan-Hybridpolymer zumindest zwei Einheiten der allgemeinen Strukturformel (I) oder (II) aufweist. Dies lässt sich insbesondere dann besonders einfach realisieren, wenn ein Alkenyl wie ein Allyl oder ein Vinyl als Rest R (mit oder ohne Index) eingesetzt wird.

Ein erfindungsgemäßes Polyaryletherketon-Polysiloxan/Polysilan-Hybridpolymer lässt sich beispielsweise durch ein erstes Verfahren mit den folgenden Schritten herstellen:
a) Umsetzen eines mit einer Schutzgruppe, insbesondere einer Carbonylschutzgruppe, versehenen 4,4'-Bis(diorganohalogenosilyl)benzophenons der allgemeinen Formel (VI) mit Wasser, 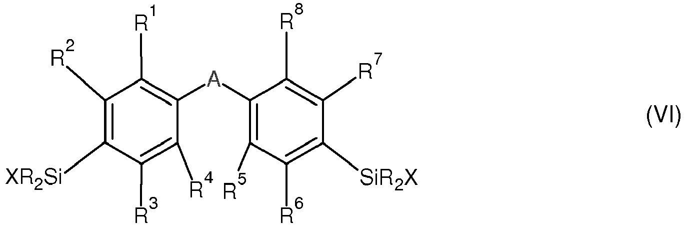 wobei
   A ein mit einer Schutzgruppe, insbesondere einer Carbonylschutzgruppe, versehenes Kohlenstoffatom bedeutet,
   R¹, R², R³, R⁴, R⁵, R⁶, R⁷, R⁸ H, D, OH, X, substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   R jeweils unabhängig von anderen Resten R im selben Molekül ein C₁-C₂₀-Alkyl, C₁-C₂₀-Alkenyl oder C₆-C₂₀-Aryl, das jeweils durch ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22, insbesondere maximal 21, insbesondere maximal 20, insbesondere maximal 19, insbesondere maximal 18, insbesondere maximal 17, insbesondere maximal 16, insbesondere maximal 15, insbesondere maximal 14, insbesondere maximal 13, insbesondere maximal 12, insbesondere maximal 11, insbesondere maximal 10, insbesondere maximal 9, insbesondere maximal 8, insbesondere maximal 7, insbesondere maximal 6, insbesondere maximal 5, insbesondere maximal 3, insbesondere maximal 2 und insbesondere maximal 1 beträgt, wobei R insbesondere substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   X jeweils unabhängig von anderen Resten X F, Cl, Br oder I bedeutet,
b) Entschützen des in Schritt a) gebildeten Produkts zu einem Polyaryletherketon-Polysiloxan-Hybridpolymer der allgemeinen Formel (I) mit

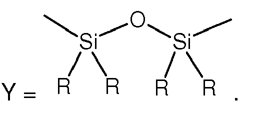

Mit diesem ersten Verfahren lassen sich also auf besonders vorteilhafte Weise Polyaryletherketon-Polysiloxan-Hybridpolymere herstellen.

Vorzugsweise kommt in diesem wie in den folgenden Verfahren den Resten R (ohne Index) und/oder den Resten X in einem Molekül jeweils dieselbe Bedeutung zu.

Vorzugsweise kommt sämtlichen Resten R, die an ein Kohlenstoffatom gebunden sind, (wie R¹, R², R³,...) die Bedeutung H zu. Vorzugsweise kommt sämtlichen Resten R, die nicht an ein Kohlenstoffatom gebunden sind, die Bedeutung H zu, soweit nicht eine andere Bedeutung zwingend vorgeschrieben ist. Vorzugsweise kommt sämtlichen Resten R die Bedeutung H zu, soweit nicht eine andere Bedeutung zwingend vorgeschrieben ist.

In einer Variante wird das Verfahren derart ausgeführt, dass das in Schritt a) hergestellte Produkt ein Silanol ist. Geeignete Reaktionsbedingungen hierfür können beispielsweise durch die Zugabe eines Trialkylamins wie etwa Triethylamin geschaffen werden. Ein derartiges Silanol lässt sich dann unter sauren Bedingungen in ein Polyaryletherketon-Polysiloxan-Hybridpolymer überführen.

In einer anderen Variante wird das Verfahren derart ausgeführt, dass die Schritte a) und b) in einem gemeinsamen Reaktionsschritt durchgeführt werden. Das heißt, bei dieser Variante wird kein Zwischenprodukt erhalten, sondern unmittelbar das ungeschützte Polyaryletherketon-Polysiloxan-Hybridpolymer als Endprodukt.

Ein erfindungsgemäßes Polyaryletherketon-Polysiloxan/Polysilan-Hybridpolymer lässt sich beispielsweise auch durch ein alternatives zweites Verfahren mit den folgenden Schritten herstellen:
a) Umsetzen eines mit einer Schutzgruppe, insbesondere einer Carbonylschutzgruppe, versehenen 4,4'- Bis(diorganohalogenosilyl)benzophenons der allgemeinen Formel (VI) mit einem Alkalimetall und/oder einer alkalimetallhaltigen organischen Verbindung, insbesondere mit einem Lthiumorganyl (also einer Lithium-haltigen organischen Verbindung; auch als Organyllithium bezeichnet) oder mit einem Magnesiumorganyl (also einer Magnesium-haltigen organischen Verbindung; auch als Organylmagnesium bezeichnet), 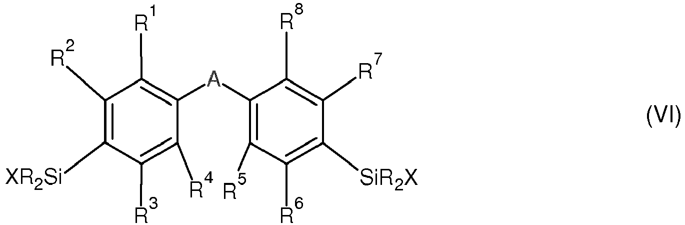 wobei
   A ein mit einer Schutzgruppe, insbesondere einer Carbonylschutzgruppe, versehenes Kohlenstoffatom bedeutet,
   R¹, R², R³, R⁴, R⁵, R⁶, R⁷, R⁸ H, D, OH, X, substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   R jeweils unabhängig von anderen Resten R im selben Molekül ein C₁-C₂₀-Alkyl, C₁-C₂₀-Alkenyl oder C₆-C₂₀-Aryl, das jeweils durch ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22, insbesondere maximal 21, insbesondere maximal 20, insbesondere maximal 19, insbesondere maximal 18, insbesondere maximal 17, insbesondere maximal 16, insbesondere maximal 15, insbesondere maximal 14, insbesondere maximal 13, insbesondere maximal 12, insbesondere maximal 11, insbesondere maximal 10, insbesondere maximal 9, insbesondere maximal 8, insbesondere maximal 7, insbesondere maximal 6, insbesondere maximal 5, insbesondere maximal 3, insbesondere maximal 2 und insbesondere maximal 1 beträgt, wobei R insbesondere substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   X jeweils unabhängig von anderen Resten X F, Cl, Br oder I bedeutet,
b) Entschützen des in Schritt a) gebildeten Produkts zu einem Polyaryletherketon-Polysilan-Hybridpolymers der allgemeinen Formel (I) mit 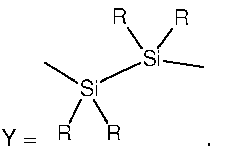 Vorzugsweise handelt es sich bei dem Alkalimetall um Natrium oder Lithium, wobei Lithium besonders bevorzugt ist.

Vorzugsweise ist die alkalimetallhaltige organische Verbindung ein Elektronentransferkatalysator, insbesondere ein Reaktionsprodukt aus einer organischen Verbindung wie etwa Graphit, Naphthalin, Antracen oder einem Dialkylbiaryl und einem Alkalimetall wie Natrium oder Lithium, wobei Lithium besonders bevorzugt ist. Als Dialkylbiaryl kann beispielsweise ein 4,4'-Dialkylbiphenyl wie 4,4'-Di-tert-butyl-biphenyl eingesetzt werden. Beispielsweise handelt es sich bei der alkalimetallhaltigen organischen Verbindung um ein Dimetallodiphenyl wie etwa ein 4,4'-Dimetallodiphenyl, insbesondere ein 4,4'-Dilithiumdiphenyl, das zur Gruppe der Lithiumorganyle zählt.

Ein erfindungsgemäßes Polyaryletherketon-Polysiloxan/Polysilan-Hybridpolymer lässt sich beispielsweise auch durch ein alternatives drittes Verfahren mit den folgenden Schritten herstellen:
a) Umsetzen eines mit einer Schutzgruppe, insbesondere einer Carbonylschutzgruppe, versehenen 4,4'-Bis(diorganohalogenosilyl)benzophenons der allgemeinen Formel (VII) mit einem 4,4'-Dilithiumbenzophenon der allgemeinen Formel (VIII), 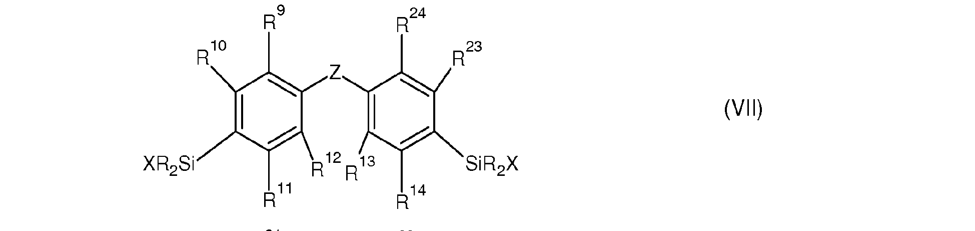 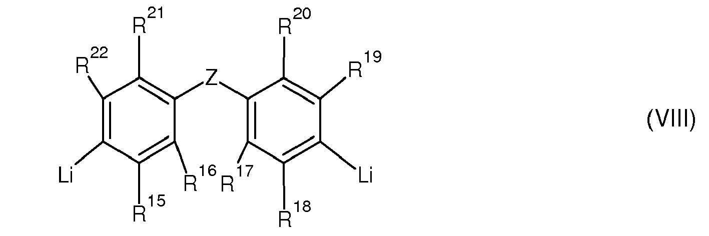 wobei
   Z ein mit einer Schutzgruppe, insbesondere einer Carbonylschutzgruppe, versehenes Kohlenstoffatom bedeutet,
   R⁹ R¹⁰, R¹¹, R¹², R¹³, R¹⁴, R¹⁵, R¹⁶, R¹⁷, R¹⁸, R¹⁹, R²⁰, R²¹, R²², R²³, R²⁴ H, D, OH, X, substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   R jeweils unabhängig von anderen Resten R im selben Molekül ein C₁-C₂₀-Alkyl, C₁-C₂₀-Alkenyl oder C₆-C₂₀-Aryl, das jeweils durch ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22, insbesondere maximal 21, insbesondere maximal 20, insbesondere maximal 19, insbesondere maximal 18, insbesondere maximal 17, insbesondere maximal 16, insbesondere maximal 15, insbesondere maximal 14, insbesondere maximal 13, insbesondere maximal 12, insbesondere maximal 11, insbesondere maximal 10, insbesondere maximal 9, insbesondere maximal 8, insbesondere maximal 7, insbesondere maximal 6, insbesondere maximal 5, insbesondere maximal 3, insbesondere maximal 2 und insbesondere maximal 1 beträgt, wobei R insbesondere substituiertes oder nicht substituiertes C₁-C₅-Alkyl (insbesondere Methyl, Ethyl, Propyl, Butyl, tert-Butyl oder Pentyl), substituiertes oder nicht substituiertes C₁-C₅-Alkenyl (insbesondere Vinyl oder Allyl) oder substituiertes oder nicht substituiertes C₆-C₁₀-Aryl (insbesondere Benzyl, Phenyl oder Naphthyl) bedeutet,
   X jeweils unabhängig von anderen Resten X F, Cl, Br oder I bedeutet,
b) Entschützen des in Schritt gebildeten Produkts zu einem Polyaryletherketon-Polysiloxan-Hybridpolymer der allgemeinen Formel (II).

Vorzugsweise wird das im dritten Verfahren eingesetzte 4,4'-Dilithiumbenzophenon vor Schritt a) durch Lithiierung eines mit einer Schutzgruppe, insbesondere einer Carbonylschutzgruppe, versehenen 4,4'-Dihalogenbenzophenons hergestellt. Die Lithiierung kann durch Umsetzung des 4,4'-Dihalogenbenzophenons mit elementarem Lithium oder mit einem Lithiumorganyl (beispielsweise Butyllithium) erfolgen.

Vorzugsweise kommt dem Rest X bei allen der vorgenannten Verfahren die Bedeutung Cl zu. Das heißt, es wird vorzugsweise ein 4,4'-Bis(diorganochlorosilyl)benzophenon eingesetzt. Alternativ kann X auch I bedeuten. Ebenso kann X auch Br bedeuten. Schließlich kann X auch F bedeuten.

Vorzugsweise kommt dem Rest X im selben Molekül stets die gleiche Bedeutung zu.

In einer Verfahrensvariante wird die (Carbonyl-)Schutzgruppe vor Schritt a) durch Umsetzen eines ungeschützten 4,4'-Bis(diorganohalogenosilyl)benzophenons mit einem Diol oder einem Dithiol, insbesondere durch Umsetzen mit 1,2-Ethandiol oder 1,2-Ethandithiol in das 4,4'-Bis(diorganohalogenosilyl)benzophenon eingeführt. Dadurch lassen sich acetalisierte oder thioacetalisierte 4,4'-Bis(diorganohalogenosilyl)benzophenone erzeugen.

Wird 1,2-Ethandithiol als Reaktionspartner zum Einführen der Schutzgruppe eingesetzt, bildet sich gemäß dem nachfolgenden Reaktionsschema ein thioacetalisiertes 4,4'-Bis(diorganohalogenosilyl)benzophenon:

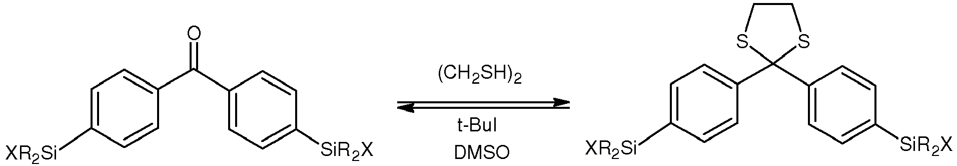

Diese Reaktion läuft am besten unter stark sauren Bedingungen ab, unter denen die zu schützende Carbonylgruppe protoniert wird. Diese stark sauren Bedingungen können beispielsweise durch Trifluoressigsäure (TFA) eingestellt werden.

Die Thioacetalisierung ist reversibel und kann beispielsweise durch Umsetzung des geschützten Produkts mit einem Alkyliodid wie etwa tert-Butyliodid (t-Bul) wieder entfernt werden. Ein geeignetes Lösungsmittel für diese Entschützungsreaktion ist Dimethylsulfoxid (DMSO).. Die Entschützung kann auch mittels einer Umsetzung mit einem Schwermetallsalz wie etwa Quecksilberchlorid durchgeführt werden. Ein geeignetes Lösungsmittel für eine derartige Entschützungsreaktion ist wässriges Acetonitril. Eine weitere Möglichkeit zur Entschützung ergibt sich aus einer Hydrierung mittels Wasserstoff unter Einsatz eines Katalysators. Ein geeigneter Katalysator ist Raney-Nickel. Eine weitere Möglichkeit zur Entschützung ergibt sich durch eine Umsetzung mit einem Alkyltriflat (Alkyl-O₃SCF₃).

Besonders geeignete Entschützungsreagenzien zur Entfernung einer Thioacetalschutzgruppe sind damit Alkyliodide, Alkyltriflate, Schwermetallsalze und zur katalytischen Hydrierung eingesetzter Wasserstoff.

Neben einer Thioacetalisierung hat sich auch eine Acetalisierung als besonders geeignete Modifikation des 4,4'-Bis(diorganohalogenosilyl)benzophenons zur Einführung einer Carbonylschutzgruppe herausgestellt. Zur Entfernung einer Acetalschutzgruppe können Säuren, insbesondere starke Säuren wie beispielsweise lodwasserstoffsäure oder Salzsäure, verwendet werden. Auch Metallhalogenide wie Eisenchlorid oder Aluminiumchlorid sind geeignete Säuren zur Entschützung. Ein geeignetes Lösungsmittel für derartige Entschützungsreaktionen ist Wasser.

Besonders geeignete Entschützungsreagenzien zur Entfernung einer Acetalschutzgruppe sind damit Säuren.

Sowohl Acetale als auch Thioacetale eignen sich folglich besonders gut zur Maskierung (also zum Schützen) der Carbonylgruppe(n) in den Ausgangssubstanzen. Vorzugsweise ist die

Schutzgruppe daher bei allen der vorgenannten Verfahren eine Carbonylschutzgruppe der allgemeinen Formel (V), 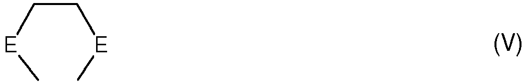 wobei E ein Sauerstoff- oder ein Schwefelatom bedeutet und wobei das zu schützende Kohlenstoffatom mittels der beiden in der Formel (V) dargestellten Bindungen an die Atome des Typs E gebunden ist. Es ist auch möglich, dass sowohl ein Sauerstoff- als auch ein Schwefelatom in der Schutzgruppe enthalten ist, der Gruppe "E" also in einem Molekül zwei unterschiedliche Bedeutungen zukommen.

Bevorzugte Ausgestaltungen des beschriebenen Polymers sind in analoger Weise auch auf die beschriebenen Verfahren anwendbar und umgekehrt. Ferner sind bevorzugte Ausgestaltungen der einzelnen Verfahren in analoger Weise auch auf die jeweils anderen Verfahren anwendbar

Die vorliegende Erfindung soll anhand der nachfolgenden Beispiele näher erläutert werden.

### Beispiel 1: Herstellung eines PAEK-Polysiloxan-Hybridpolymers

Dieses Beispiel beschreibt eine direkte Synthese von Polyaryletherketon-Polysiloxan (22) gemäß dem nachfolgenden Reaktionsschema. 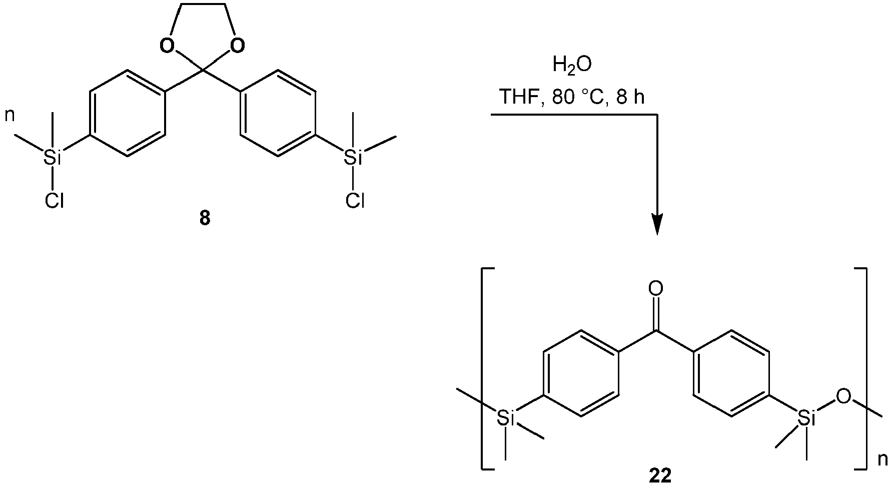 Zu einer Lösung von 4,4'-(1,3-dioxolan-2,2-diyl)bis(4,1-phenylen)bis(chlorodimethylsilan) (8) (0.400 mmol) in THF (10 mL) wird Wasser (1.0 mL) langsam zugegeben. Das Reaktionsgemisch wird bei 80 °C für 8 h gerührt. Nach Abschluss der Reaktion wird das Polysiloxan (22) abfiltriert und unter Vakuum getrocknet. Für dieses Produkt wurden die folgenden Synthese- und Analysenergebnisse erzielt:
Ausbeute: 90 %

¹H-NMR (200 MHz, CDCl*₃*) δ = 7.72 (dd, ³*J*(H,H)=22.6, 7.3 Hz, 8H, *H*-Ar), 0.40 - 0.38 (m, 12H, Si(C*H*₃)₂) ppm.

¹³C-NMR (90 MHz, CDCl*₃*) δ = 197.0, 145.0, 138.2, 132.9, 129.2, 0.84 ppm.

²⁹Si-NMR (CDCl*₃*) δ = -0.55 ppm.

### Beispiel 2: Herstellung eines ersten PAEK-Polysiloxan-Hybridpolymers

Dieses Beispiel beschreibt eine Polymersynthese unter vorheriger Darstellung eines Silanolzwischenprodukts.

Zunächst erfolgt eine Synthese des Silanolzwischenprodukts (8A) gemäß dem nachfolgenden Reaktionsschema: 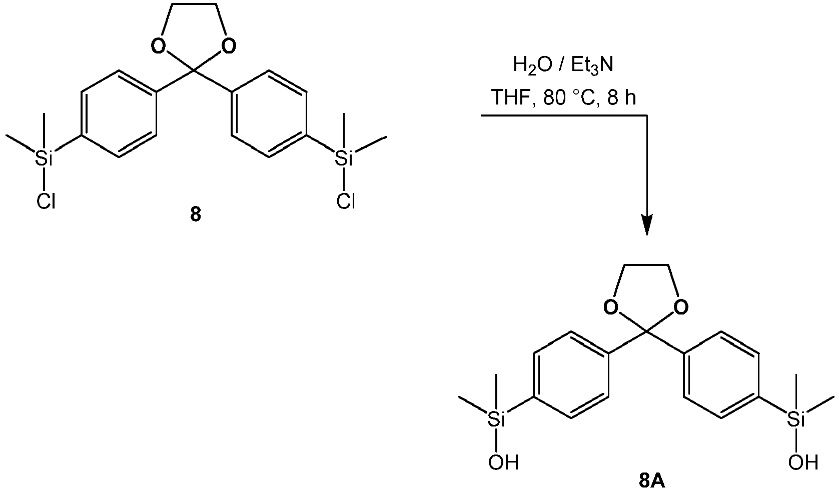 Zu einer Lösung von 4,4'-(1,3-dioxolan-2,2-diyl)bis(4,1-phenylen)bis(chlorodimethylsilan) (8) (0.400 mmol) in THF (10 mL) wird Triethylamin (3 mL) zugegeben. Das Reaktionsgemisch wird bei 80 °C erhitzt, und Wasser (1.0 mL) wird langsam zugetropft. Das Reaktionsgemisch wird für 8 h bei dieser Temperatur gerührt. Das Gemisch wird auf Raumtemperatur gebracht. Nach dem Entfernen des Lösungsmittels im Vakuum erhält man das Produkt als farbloses Öl. Für dieses Zwischenprodukt wurden die folgenden Synthese- und Analysenergebnisse erzielt:
Ausbeute: 95 %

¹H-NMR (200 MHz, CDCl*₃*) δ = 7.54 (s, 8H, *H-*Ar), 4.06 (s, 4H, C*H*₂-C*H*₂), 0.37 (s, 12H, Si(C*H*₃)₂) ppm.

¹³C-NMR (90 MHz, CDCl*₃*) δ = 143.0, 139.9, 133.0, 128.0, 125.0, 45.8, 0.11 ppm.

²⁹Si-NMR (CDCl*₃*) δ = 4.86 ppm.

Nun erfolgte ausgehend vom Zwischenprodukt eine Synthese von Polyaryletherketon-Polysiloxan (22) gemäß dem nachfolgenden Reaktionsschema:

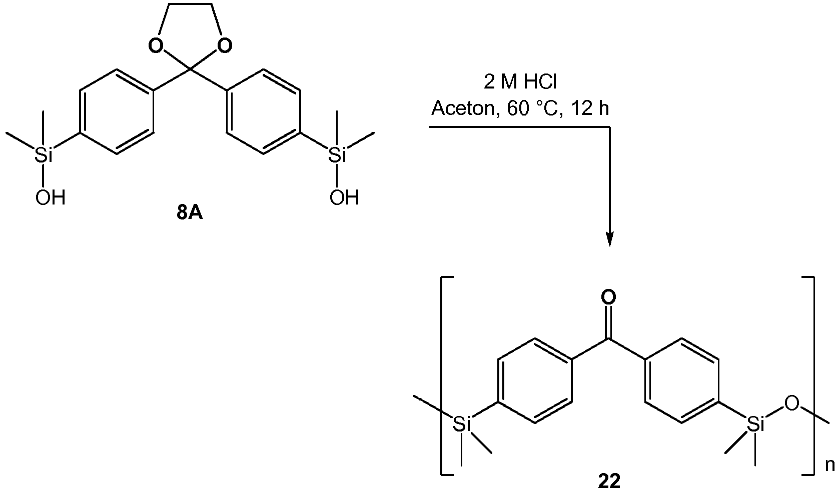

Zu einer Lösung des Silanols (8A) (0.400 mmol) in Aceton (10 mL) wird 2.0 M Salzsäure (2 mL) gegeben. Das Reaktionsgemisch wird für 12 h bei 60 °C gerührt. Nach Abschluss der Reaktion wird das Polysiloxan (22) abfiltriert und bei reduziertem Druck getrocknet. Für das Produkt wurden die folgenden Synthese- und Analysenergebnisse erzielt:
Ausbeute: 95 %

¹H-NMR (200 MHz, CDCl*₃*) δ = 7.68 (d, ³*J*(H,H)=8.1, 4H, *H*-Ar), 7.51 (d, ³*J*(H,H)=8.1, 4H, *H-*Ar), 0.42 (s, 12H, Si(C*H*₃)₂ ppm.

¹³C-NMR (90 MHz, CDCl*₃*) δ = 197.0, 145.0, 138.2, 133.2, 129.2, 0.66 ppm.

²⁹Si-NMR (CDCl*₃*) δ = -0.56 ppm.

### Beispiel 3: Herstellung eines PAEK-Polysilan-Hybridpolymers

Dieses Beispiel beschreibt eine Polymersynthese von geschütztem Polyaryletherketon-Polysilan (23A) gemäß dem nachfolgenden Reaktionsschema:

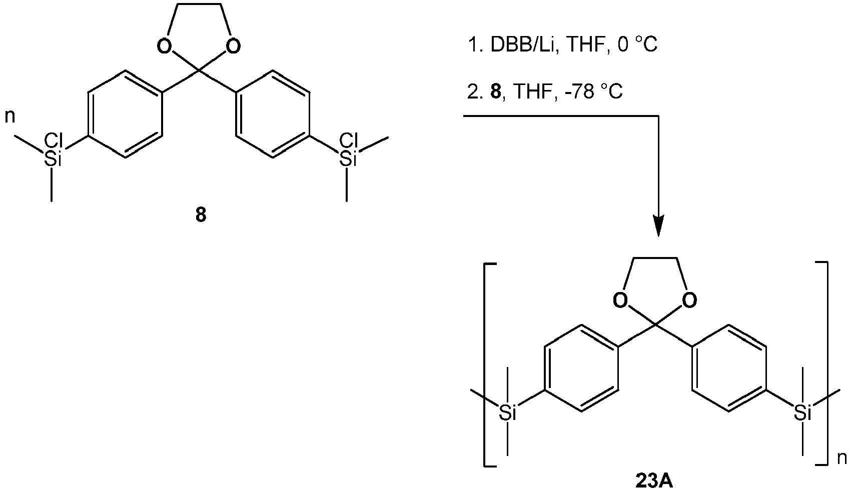

Lithiumgranulat (100 mg, 14.4 mmol) wird unter Inertbedingungen vorgelegt, und eine Lösung aus 4,4'-Di-tert-butyl-biphenyl (DBB) (60.0 mg, 0.240 mmol) in THF (5 mL) wird hinzugetropft. Nach einigen Minuten verfärbt sich die Lösung blau-grün und wird im Anschluss auf 0 °C abgekühlt. Die Lösung wird zwei Stunden stark gerührt. Danach werden 410 mg 8 (1.00 mmol) in THF (10 mL) gelöst und innerhalb von 15 Minuten zugetropft. Die Lösung wird über Nacht gerührt, und die Farbe wechselt zu dunkelrot. Mit Hilfe einer Spritze wird die Lösung in einen Tropftrichter überführt, um das überschüssige Lithium abzutrennen. Dann wird es zu einer Lösung von 8 (410 mg, 1.00 mmol) in THF (10 mL) innerhalb von einer Stunde bei -78 °C hinzugetropft. Das Reaktionsgemisch wird auf Raumtemperatur erwärmt und über Nacht gerührt. THF wird unter reduziertem Druck entfernt und Diethylether zugegeben. Das Lithiumchlorid wird abfiltriert und nach dem Entfernen des Diethylethers erhält man ein gelbes ÖI. Für das Produkt wurden die folgenden Synthese- und Analysenergebnisse erzielt:
¹H-NMR (200 MHz, CDCl*₃*) δ = 7.72 - 7.59 (m, 8H, *H-*Ar), 4.10 (s, 4H, C*H*₂), 0.41 (s, 12H, Si(C*H*₃)₂) ppm
¹³C-NMR (90 MHz, CDCl*₃*) δ = 142.7, 139.3, 132.7, 125.4, 109.1, 64.8, 0.80 ppm.
²⁹Si-NMR (79.3 MHz, CDCl₃) δ = -1.13 ppm.

Das geschützte Polyaryletherketon-Polysilan (23A) kann dann über an sich bekannte Wege (vgl. beispielsweise die oben erläuterten Entschützungsreaktionen) in das entsprechende ungeschützte Polyaryletherketon-Polysilan überführt werden.

## Patentansprüche

1. Polyaryletherketon-Polysiloxan/Polysilan-Hybridpolymer, das zumindest eine Einheit mit der nachfolgenden allgemeinen Strukturformel (I) oder (II) enthält, 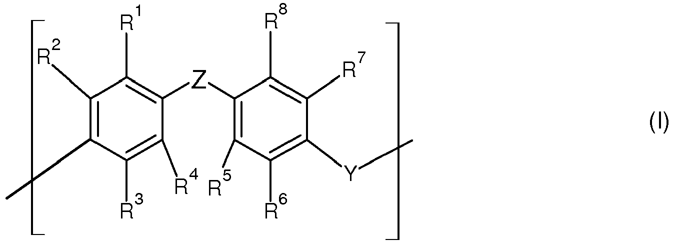 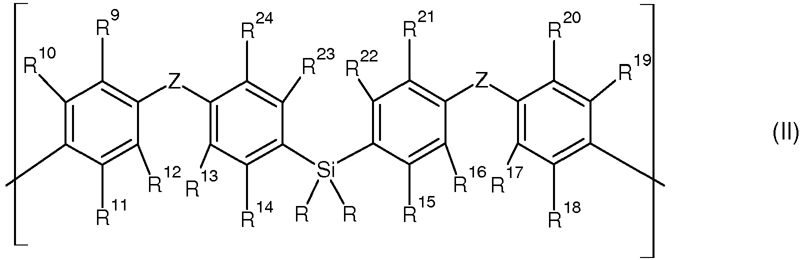 wobei
R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴
H, D, OH, X, substituiertes oder nicht substituiertes C₁-C₅-Alkyl, substituiertes oder nicht substituiertes C₁-C₅-Alkenyl oder substituiertes oder nicht substituiertes C₆-C₁₀-Aryl bedeutet,
R jeweils unabhängig von anderen Resten R im selben Molekül ein C₁-C₂₀-Alkyl, C₁-C₂₀-Alkenyl oder C₆-C₂₀-Aryl, das jeweils durch ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22 beträgt,
X jeweils unabhängig von anderen Resten X F, Cl, Br oder I bedeutet,
Y ein Rest der folgenden allgemeinen Formeln (III) oder (IV) ist und
Z eine Carbonylgruppe oder ein mit einer Carbonylschutzgruppe versehenes Kohlenstoffatom bedeutet:

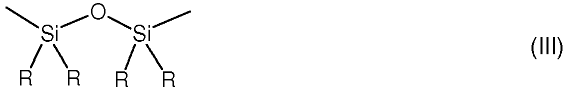

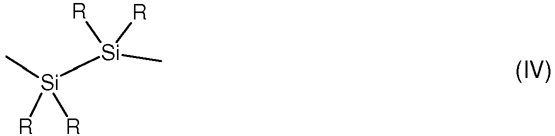

2. Polyaryletherketon-Polysiloxan/Polysilan-Hybridpolymer gemäß Anspruch 1, **dadurch gekennzeichnet, dass** die Carbonylschutzgruppe eine Verbindung der allgemeinen Formel (V) ist, 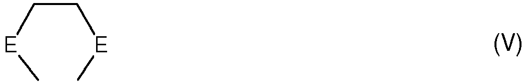 wobei
E O oder S bedeutet
und wobei das zu schützende Kohlenstoffatom mittels der beiden in der Formel (V) dargestellten Bindungen an die Atome des Typs E gebunden ist.

3. Polyaryletherketon-Polysiloxan/Polysilan-Hybridpolymer gemäß Anspruch 1 oder 2, **dadurch gekennzeichnet, dass** der Rest R ausgewählt ist aus der Gruppe bestehend aus substituierten oder nicht substituierten C₁-C₅-Alkylen, substituierten oder nicht substituierten C₁-C₅-Alkenylen und substituierten oder nicht substituierten C₆-C₁₀-Arylen, insbesondere bestehend aus substituiertem oder nicht substituiertem Methyl, Ethyl, Propyl, Butyl, tert-Butyl, Pentyl, Vinyl, Allyl, Benzyl, Phenyl und Naphthyl.

4. Polyaryletherketon-Polysiloxan/Polysilan-Hybridpolymer gemäß einem der vorherigen Ansprüche, **dadurch gekennzeichnet, dass** es mindestens zwei Einheiten mit der allgemeinen Strukturformel (I) oder (II) aufweist, wobei zwischen den Resten R, R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³ und/oder R²⁴ der einzelnen Einheiten Bindungen existieren, die eine dreidimensionale Verknüpfung des Hybridpolymers ermöglichen.

5. Verfahren zur Herstellung eines Polyaryletherketon-Polysiloxan/Polysilan-Hybridpolymers gemäß einem der Ansprüche 1 bis 4, **gekennzeichnet durch** die folgenden Schritte:
a) Umsetzen eines mit einer Carbonylschutzgruppe versehenen 4,4'-Bis(diorganohalogenosilyl)benzophenons der allgemeinen Formel (VI) mit Wasser, 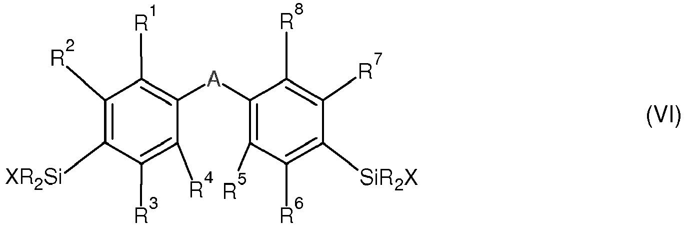 wobei
A ein mit einer Carbonylschutzgruppe versehenes Kohlenstoffatom bedeutet, R¹, R², R³, R⁴, R⁵, R⁶, R⁷, R⁸ H, D, X, substituiertes oder nicht substituiertes C₁-C₅-Alkyl, substituiertes oder nicht substituiertes C₁-C₅-Alkenyl oder substituiertes oder nicht substituiertes C₆-C₁₀-Aryl bedeutet,
R jeweils unabhängig von anderen Resten R im selben Molekül ein C₁-C₂₀-Alkyl, C₁-C₂₀-Alkenyl oder C₆-C₂₀-Aryl, das jeweils **durch** ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22 beträgt,
X jeweils unabhängig von anderen Resten X F, Cl, Br oder I bedeutet,
b) Entschützen des in Schritt a) gebildeten Produkts zu einem Polyaryletherketon-Polysiloxan-Hybridpolymer der allgemeinen Formel (I) mit

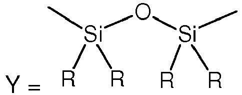

6. Verfahren gemäß Anspruch 5, **dadurch gekennzeichnet, dass** das in Schritt a) hergestellte Produkt ein Silanol ist.

7. Verfahren gemäß Anspruch 5, **dadurch gekennzeichnet, dass** die Schritte a) und b) in einem gemeinsamen Reaktionsschritt durchgeführt werden.

8. Verfahren zur Herstellung eines Polyaryletherketon-Polysiloxan/Polysilan-Hybridpolymers gemäß einem der Ansprüche 1 bis 4, **gekennzeichnet durch** die folgenden Schritte:
a) Umsetzen eines mit einer Carbonylschutzgruppe versehenen 4,4'-Bis(diorganohalogenosilyl)benzophenons der allgemeinen Formel (VI) mit einem Lithiumorganyl oder einem Magnesiumorganyl, 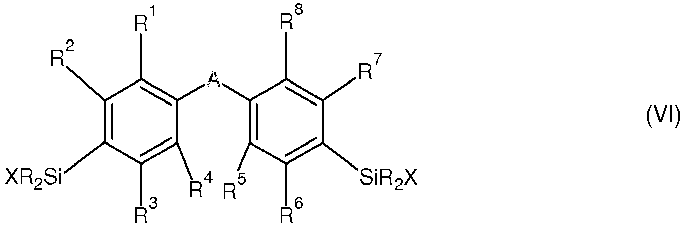 wobei
A ein mit einer Carbonylschutzgruppe versehenes Kohlenstoffatom bedeutet, R¹, R², R³, R⁴, R⁵, R⁶, R⁷, R⁸ H, D, OH, X, substituiertes oder nicht substituiertes C₁-C₅-Alkyl, substituiertes oder nicht substituiertes C₁-C₅-Alkenyl oder substituiertes oder nicht substituiertes C₆-C₁₀-Aryl bedeutet,
R jeweils unabhängig von anderen Resten R im selben Molekül ein C₁-C₂₀-Alkyl, C₁-C₂₀-Alkenyl oder C₆-C₂₀-Aryl, das jeweils **durch** ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22 beträgt,
X jeweils unabhängig von anderen Resten X F, Cl, Br oder I bedeutet,
b) Entschützen des in Schritt a) gebildeten Produkts zu einem Polyaryletherketon-Polysilan-Hybridpolymer der allgemeinen Formel (I) mit

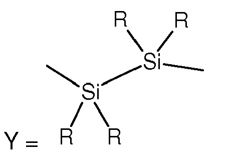

9. Verfahren zur Herstellung eines Polyaryletherketon-Polysiloxan/Polysilan-Hybridpolymers gemäß einem der Ansprüche 1 bis 4, **gekennzeichnet durch** die folgenden Schritte:
a) Umsetzen eines mit einer Carbonylschutzgruppe versehenen 4,4'-Bis(diorganohalogenosilyl)benzophenons der allgemeinen Formel (VII) mit einem 4,4'-Dilithiumbenzophenon der allgemeinen Formel (VIII), 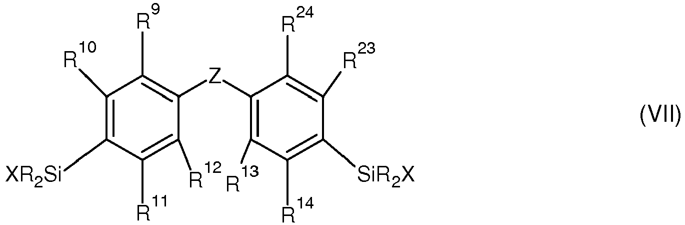 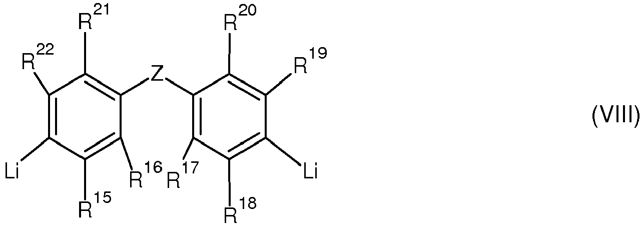 wobei
Z ein mit einer Carbonylschutzgruppe versehenes Kohlenstoffatom bedeutet, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴ H, D, OH, X, substituiertes oder nicht substituiertes C₁-C₅-Alkyl, substituiertes oder nicht substituiertes C₁-C₅-Alkenyl oder substituiertes oder nicht substituiertes C₆-C₁₀-Aryl bedeutet,
R jeweils unabhängig von anderen Resten R im selben Molekül ein C₁-C₂₀-Alkyl, C₁-C₂₀-Alkenyl oder C₆-C₂₀-Aryl, das jeweils **durch** ein oder mehrere Stickstoff-, Sauerstoff- und/oder Schwefelatome unterbrochen und/oder substituiert sein kann, oder H ist, wobei zumindest ein Rest R pro Siliciumatom ungleich H sein muss und wobei die Gesamtzahl der Kohlenstoffatome der Reste R pro Siliciumatom maximal 22 beträgt,
X jeweils unabhängig von anderen Resten X F, Cl, Br oder I bedeutet,
b) Entschützen des in Schritt gebildeten Produkts zu einem Polyaryletherketon-Polysiloxan-Hybridpolymer der allgemeinen Formel (II).

10. Verfahren gemäß Anspruch 9, **dadurch gekennzeichnet, dass** das 4,4'-Dilithiumbenzophenon vor Schritt a) durch Lithiierung eines mit einer Carbonylschutzgruppe versehenen 4,4'-Dihalogenbenzophenons hergestellt wird.

11. Verfahren gemäß einem der Ansprüche 5 bis 10, **dadurch gekennzeichnet, dass** X Cl bedeutet.

12. Verfahren gemäß einem der Ansprüche 5 bis 11, **dadurch gekennzeichnet, dass** die Carbonylschutzgruppe eine Verbindung der allgemeinen Formel (II) ist, 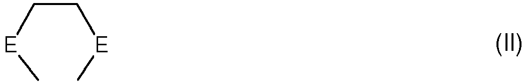 wobei
E O oder S bedeutet
und wobei das zu schützende Kohlenstoffatom mittels der beiden in der Formel (II) dargestellten Bindungen an die Atome des Typs E gebunden ist.

## Claims

1. Polyaryl ether ketone-polysiloxane/polysilane hybrid polymer which contains at least one unit having the following general structural formula (I) or (II), 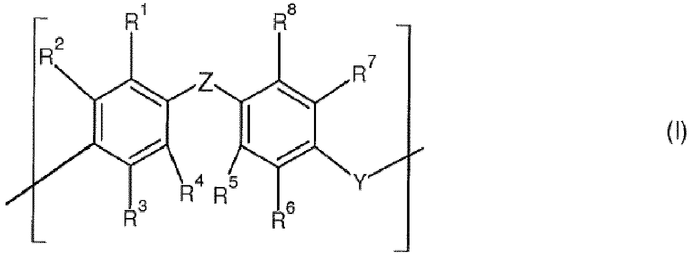 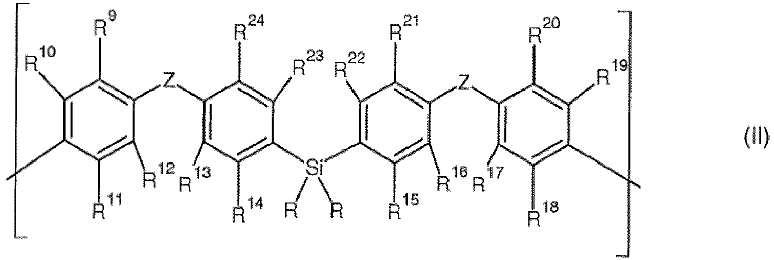 where
R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴ are each
H, D, OH, X, substituted or unsubstituted C₁-C₅-alkyl, substituted or unsubstituted C₁-C₅-alkenyl or substituted or unsubstituted C₆-C₁₀-aryl,
R is in each case, independently of other radicals R in the same molecule, C₁-C₂₀-alkyl, C₁-C₂₀-alkenyl or C₆-C₂₀-aryl, which can in each case be interrupted and/or substituted by one or more nitrogen, oxygen and/or sulphur atoms or is H, where at least one radical R per silicon atom has to be different from H and the total number of carbon atoms of the radicals R per silicon atom is not more than 22,
X is F, Cl, Br or I, in each case independently of other radicals X,
Y is a radical of the general formula (III) or (IV) below and
Z is a carbonyl group or a carbon atom provided with a carbonyl protective group:

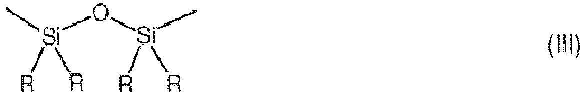

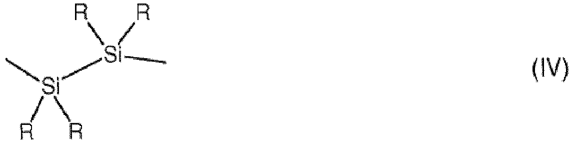

2. Polyaryl ether ketone-polysiloxane/polysilane hybrid polymer according to Claim 1, **characterized in that** the carbonyl protective group is a compound of the general formula (V), 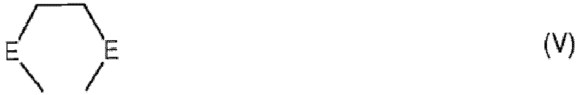 where
E is O or S and the carbon atom to be protected is bound by means of the two bonds shown in the formula (V) to the atoms of the type E.

3. Polyaryl ether ketone-polysiloxane/polysilane hybrid polymer according to Claim 1 or 2, **characterized in that** the radical R is selected from the group consisting of substituted or unsubstituted C₁-C₅-alkyls, substituted or unsubstituted C₁-C₅-alkenyls and substituted or unsubstituted C₆-C₁₀-aryls, in particular consisting of substituted or unsubstituted methyl, ethyl, propyl, butyl, tert-butyl, pentyl, vinyl, allyl, benzyl, phenyl and naphthyl.

4. Polyaryl ether ketone-polysiloxane/polysilane hybrid polymer according to any of the preceding claims, **characterized in that** it has at least two units having the general structural formula (I) or (II), where between the radicals R, R¹, R², R³, R⁴, R⁵ R⁶, R⁷, R⁸_{,} R⁹, R¹⁰, R¹¹, R¹², R¹³, R¹⁴, R¹⁵, R¹⁶, R¹⁷, R¹⁸, R¹⁹, R²⁰, R²¹, R²², R²³ and/or R²⁴ of the individual units there are bonds which make three-dimensional linking of the hybrid polymer possible.

5. Process for preparing a polyaryl ether ketone-polysiloxane/polysilane hybrid polymer according to any of Claims 1 to 4, **characterized by** the following steps:
a) reacting a 4,4'-bis(diorganohalosilyl)benzophenone which is provided with a carbonyl protective group and has the general formula (VI) with water, 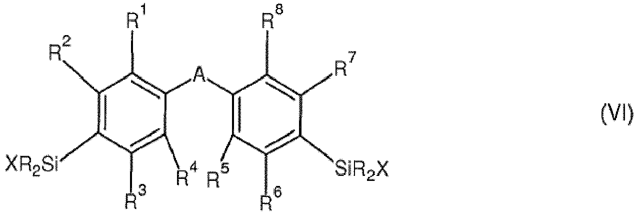 where
A is a carbon atom provided with a carbonyl protective group,
R¹, R², R³, R⁴, R⁵, R⁶, R⁷, R⁸ are each H, D, X, substituted or unsubstituted C₁-C₅-alkyl, substituted or unsubstituted C₁-C₅-alkenyl or substituted or unsubstituted C₆-C₁₀-aryl,
R is, in each case independently of other radicals R in the same molecule, C₁-C₂₀-alkyl, C₁-C₂₀-alkenyl or C₆-C₂₀-aryl which can in each case be interrupted and/or substituted by one or more nitrogen, oxygen and/or sulphur atoms or is H, where at least one radical R per silicon atom has to be different from H and the total number of carbon atoms of the radicals R per silicon atom is not more than 22,
X is F, Cl, Br or I, in each case independently of other radicals X,
b) unprotecting the product formed in step a) to give a polyaryl ether ketone-polysiloxane hybrid polymer of the general formula (I) where

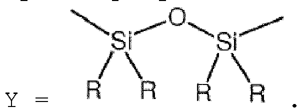

6. Process according to Claim 5, **characterized in that** the product produced in step a) is a silanol.

7. Process according to Claim 5, **characterized in that** the steps a) and b) are carried out in a joint reaction step.

8. Process for preparing a polyaryl ether ketone-polysiloxane/polysilane hybrid polymer according to any of Claims 1 to 4, **characterized by** the following steps:
a) reacting a 4,4'-bis(diorganohalosilyl)benzophenone which is provided with a carbonyl protective group and has the general formula (VI) with a lithium organyle or a magnesium organyle, 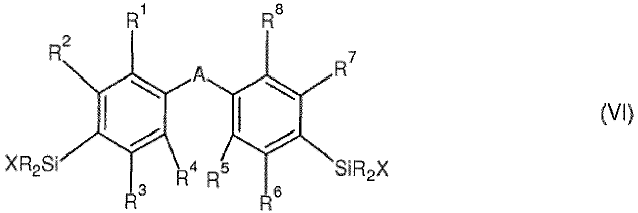 where
A is a carbon atom provided with a carbonyl protective group,
R¹, R², R³, R⁴, R⁵, R⁶, R⁷, R⁸ are each H, D, OH, X, substituted or unsubstituted C₁-C₅-alkyl, substituted or unsubstituted C₁-C₅-alkenyl or substituted or unsubstituted C₆-C₁₀-aryl,
R is, in each case independently of other radicals R in the same molecule, C₁-C₂₀-alkyl, C₁-C₂₀-alkenyl or C₆-C₂₀-aryl which can in each case be interrupted and/or substituted by one or more nitrogen, oxygen and/or sulphur atoms or is H, where at least one radical R per silicon atom has to be different from H and the total number of carbon atoms of the radicals R per silicon atom is not more than 22,
X is F, Cl, Br or I, in each case independently of other radicals X,
b) unprotecting the product formed in step a) to give a polyaryl ether ketone-polysilane hybrid polymer of the general formula (I) where Y =

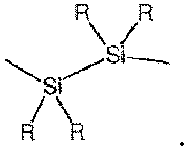

9. Process for preparing a polyaryl ether ketone-polysiloxane/polysilane hybrid polymer according to any of Claims 1 to 4, **characterized by** the following steps:
a) reacting a 4,4'-bis(diorganohalosilyl)benzophenone which is provided with a carbonyl protective group and has the general formula (VII) with a 4,4'-dilithiobenzophenone of the general formula (VIII), 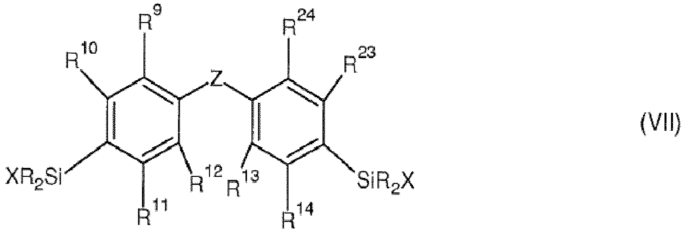 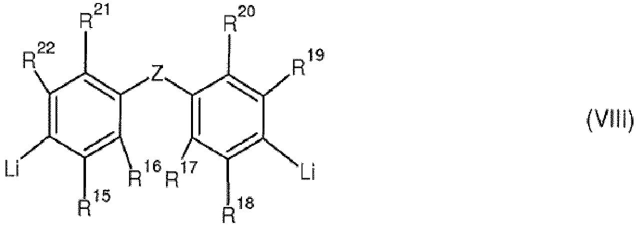 where
Z is a carbon atom provided with a carbonyl protective group,
R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴ is H, D, OH, X, substituted or unsubstituted C₁-C₅-alkyl, substituted or unsubstituted C₁-C₅-alkenyl or substituted or unsubstituted C₆-C₁₀-aryl,
R is, in each case independently of other radicals R in the same molecule, C₁-C₂₀-alkyl, C₁-C₂₀-alkenyl or C₆-C₂₀-aryl which can in each case be interrupted and/or substituted by one or more nitrogen, oxygen and/or sulphur atoms or is H, where at least one radical R per silicon atom has to be different from H and the total number of carbon atoms of the radicals R per silicon atom is not more than 22,
X is F, Cl, Br or I, in each case independently of other radicals X,
b) unprotecting the product formed in the step to give a polyaryl ether ketone-polysiloxane hybrid polymer of the general formula (II).

10. Process according to Claim 9, **characterized in that** the 4,4'-dilithiobenzophenone is prepared before step a) by lithiation of a 4,4'-dihalobenzophenone provided with a carbonyl protective group.

11. Process according to any of Claims 5 to 10, **characterized in that** X is Cl.

12. Process according to any of Claims 5 to 11, **characterized in that** the carbonyl protective group is a compound of the general formula (II), 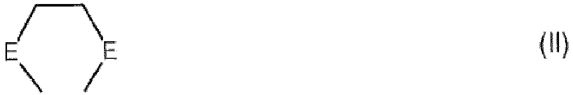 where
E is O or S
and the carbon atom to be protected is bound by means of the two bonds shown in the formula (II) to the atoms of the type E.

## Revendications

1. Polymère hybride de polyaryléthercétone-polysiloxane/polysilane, qui contient au moins une unité ayant la formule structurale générale (I) ou (II) suivante : 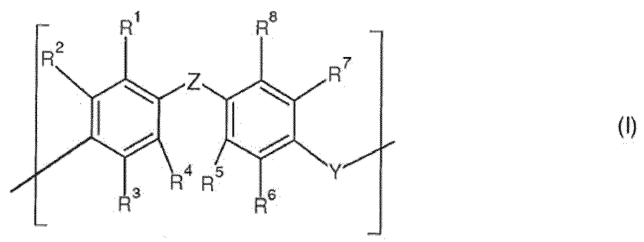 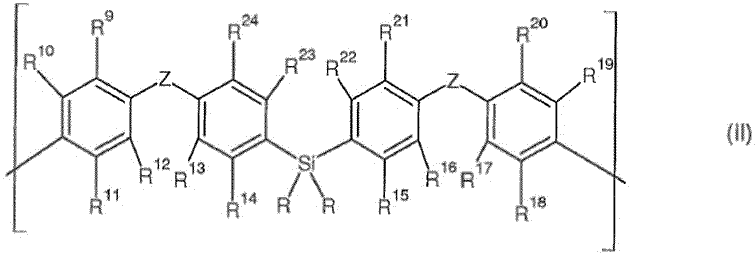 dans lesquelles
R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴ signifient H, D, OH, X, alkyle en C₁-C₅ substitué ou non substitué, alcényle en C₁-C₅ substitué ou non substitué, ou aryle en C₆-C₁₀ substitué ou non substitué, les R signifient chacun indépendamment des autres radicaux R dans la même molécule un alkyle en C₁-C₂₀, alcényle en C₁-C₂₀ ou aryle en C₆-C₂₀, qui peuvent chacun être interrompus par un ou plusieurs atomes d'azote, d'oxygène et/ou de soufre et/ou substitués, ou H, au moins un radical R par atome de silicium devant être différent de H, et le nombre total d'atomes de carbone des radicaux R par atome de silicium étant d'au plus 22, les X signifient chacun indépendamment des autres radicaux X F, Cl, Br ou I,
Y signifie un radical de la formule générale (III) ou (IV) suivante, et
Z signifie un groupe carbonyle ou un atome de carbone muni d'un groupe protecteur carbonyle :

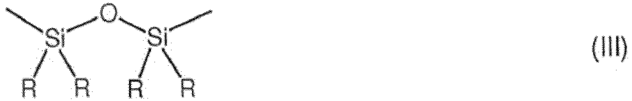

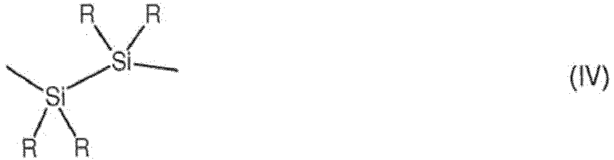

2. Polymère hybride de polyaryléthercétone-polysiloxane/polysilane selon la revendication 1, **caractérisé en ce que** le groupe protecteur carbonyle est un composé de formule générale (V) 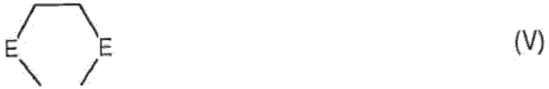 dans laquelle
E signifie O ou S,
et dans laquelle l'atome de carbone à protéger est relié aux atomes de type E par les deux liaisons représentées dans la formule (V).

3. Polymère hybride de polyaryléthercétone-polysiloxane/polysilane selon la revendication 1 ou 2, **caractérisé en ce que** le radical R est choisi dans le groupe constitué par alkylène en C₁-C₅ substitué ou non substitué, alcénylène en C₁-C₅ substitué ou non substitué, et arylène en C₆-C₁₀ substitué ou non substitué, notamment constitué par méthyle, éthyle, propyle, butyle, tert-butyle, pentyle, vinyle, allyle, benzyle, phényle et napthyle substitués ou non substitués.

4. Polymère hybride de polyaryléthercétone-polysiloxane/polysilane selon l'une quelconque des revendications précédentes, **caractérisé en ce qu'**il comprend au moins deux unités ayant la formule structurale générale (I) ou (II), des liaisons qui permettent une connexion tridimensionnelle du polymère hybride existant entre les radicaux R, R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²², R²³ et/ou R²⁴ des unités individuelles.

5. Procédé de fabrication d'un polymère hybride de polyaryléthercétone-polysiloxane/polysilane selon l'une quelconque des revendications 1 à 4, **caractérisé par** les étapes suivantes :
a) la mise en réaction d'une 4,4'-bis(diorganohalogénosilyl)benzophénone munie d'un groupe protecteur carbonyle de formule générale (VI) avec de l'eau 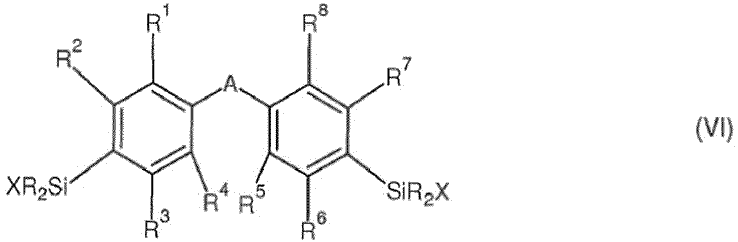 dans laquelle A signifie un atome de carbone muni d'un groupe protecteur carbonyle,
R¹, R², R³, R⁴, R⁵, R⁶, R⁷, R⁸ signifient H, D, X, alkyle en C₁-C₅ substitué ou non substitué, alcényle en C₁-C₅ substitué ou non substitué, ou aryle en C₆-C₁₀ substitué ou non substitué,
les R signifient chacun indépendamment des autres radicaux R dans la même molécule un alkyle en C₁-C₂₀, alcényle en C₁-C₂₀ ou aryle en C₆-C₂₀, qui peuvent chacun être interrompus par un ou plusieurs atomes d'azote, d'oxygène et/ou de soufre et/ou substitués, ou H, au moins un radical R par atome de silicium devant être différent de H, et le nombre total d'atomes de carbone des radicaux R par atome de silicium étant d'au plus 22, les X signifient chacun indépendamment des autres radicaux X F, Cl, Br ou I,
b) la déprotection du produit formé à l'étape a) pour obtenir un polymère hybride de polyaryléthercétone-polysiloxane de formule générale (I) avec Y =

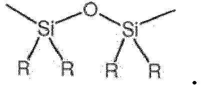

6. Procédé selon la revendication 5, **caractérisé en ce que** le produit fabriqué à l'étape a) est un silanol.

7. Procédé selon la revendication 5, **caractérisé en ce que** les étapes a) et b) sont réalisées en une étape de réaction commune.

8. Procédé de fabrication d'un polymère hybride de polyaryléthercétone-polysiloxane/polysilane selon l'une quelconque des revendications 1 à 4, **caractérisé par** les étapes suivantes :
a) la mise en réaction d'une 4,4'-bis(diorganohalogénosilyl)benzophénone munie d'un groupe protecteur carbonyle de formule générale (VI) avec un organyle de lithium ou un organyle de magnésium 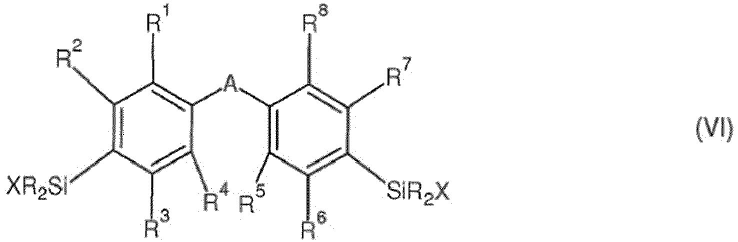 dans laquelle
A signifie un atome de carbone muni d'un groupe protecteur carbonyle, R¹, R², R³, R⁴, R⁵, R⁶, R⁷, R⁸ signifient H, D, OH, X, alkyle en C₁-C₅ substitué ou non substitué, alcényle en C₁-C₅ substitué ou non substitué, ou aryle en C₆-C₁₀ substitué ou non substitué,
les R signifient chacun indépendamment des autres radicaux R dans la même molécule un alkyle en C₁-C₂₀, alcényle en C₁-C₂₀ ou aryle en C₆-C₂₀, qui peuvent chacun être interrompus par un ou plusieurs atomes d'azote, d'oxygène et/ou de soufre et/ou substitués, ou H, au moins un radical R par atome de silicium devant être différent de H, et le nombre total d'atomes de carbone des radicaux R par atome de silicium étant d'au plus 22, les X signifient chacun indépendamment des autres radicaux X F, Cl, Br ou I,
b) la déprotection du produit formé à l'étape a) pour obtenir un polymère hybride de polyaryléthercétone-polysilane de formule générale (I) avec

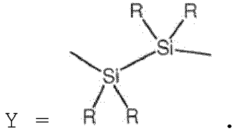

9. Procédé de fabrication d'un polymère hybride de polyaryléthercétone-polysiloxane/polysilane selon l'une quelconque des revendications 1 à 4, **caractérisé par** les étapes suivantes :
a) la mise en réaction d'une 4,4'-bis(diorganohalogénosilyl)benzophénone munie d'un groupe protecteur carbonyle de formule générale (VII) avec une 4,4'-dilithiumbenzophénone de formule générale (VIII) 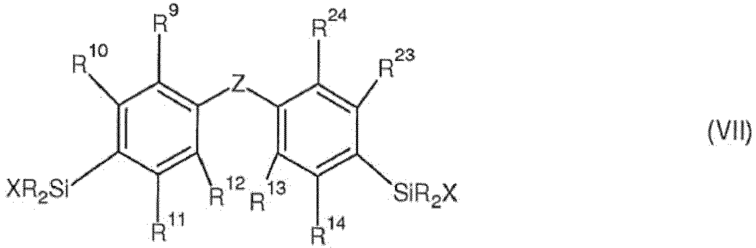 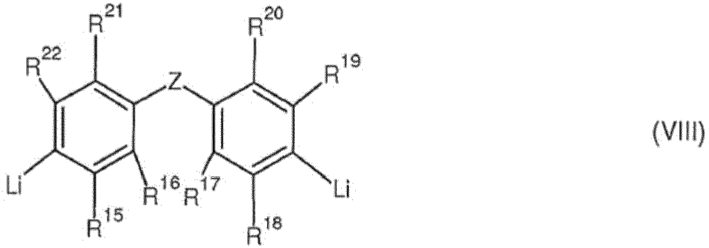 dans lesquelles
Z signifie un atome de carbone muni d'un groupe protecteur carbonyle,
R⁹, R¹⁰, R¹¹, R¹², R¹³, R¹⁴, R¹⁵, R¹⁶, R¹⁷, R¹⁸, R¹⁹, R²⁰, R²¹, R²², R²³, R²⁴ signifient H, D, OH, X, alkyle en C₁-C₅ substitué ou non substitué, alcényle en C₁-C₅ substitué ou non substitué, ou aryle en C₆-C₁₀ substitué ou non substitué,
les R signifient chacun indépendamment des autres radicaux R dans la même molécule un alkyle en C₁-C₂₀, alcényle en C₁-C₂₀ ou aryle en C₆-C₂₀, qui peuvent chacun être interrompus par un ou plusieurs atomes d'azote, d'oxygène et/ou de soufre et/ou substitués, ou H, au moins un radical R par atome de silicium devant être différent de H, et le nombre total d'atomes de carbone des radicaux R par atome de silicium étant d'au plus 22, les X signifient chacun indépendamment des autres radicaux X F, Cl, Br ou I,
b) la déprotection du produit formé à l'étape pour obtenir un polymère hybride de polyaryléthercétone-polysiloxane de formule générale (II).

10. Procédé selon la revendication 9, **caractérisé en ce que** la 4,4'-dilithiumbenzophénone est fabriquée avant l'étape a) par lithiation d'une 4,4'-dihalogénobenzophénone munie d'un groupe protecteur carbonyle.

11. Procédé selon l'une quelconque des revendications 5 à 10, **caractérisé en ce que** X signifie Cl.

12. Procédé selon l'une quelconque des revendications 5 à 11, **caractérisé en ce que** le groupe protecteur carbonyle est un composé de formule générale (II) 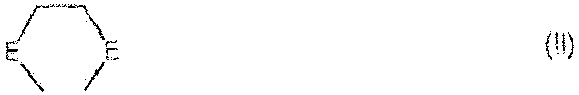 dans laquelle
E signifie O ou S,
et dans laquelle l'atome de carbone à protéger est relié aux atomes de type E par les deux liaisons représentées dans la formule (II).
